# EUROPEAN PATENT APPLICATION

(11) **EP 0 989 047 A2**
(43) Date of publication of application: **29.03.2000**
(21) Application number: 99830536.1
(22) Date of filing: 27.08.1999
(51) Int. Cl.: B62D 5/04

(54) **Electronic power steering for electric vehicles**

(30) Priority: 21.09.1998 IT PR980058
(71) Applicant: Zapi S.P.A., 42028 Poviglio (Reggio Emilia) (IT)
(72) Inventor: Iotti, Maurizio, 42011 Bagnolo in Piano (Reggio Emilia) (IT)
(74) Representative: Gotra, Stefano

(57) **Abstract**

Electronic power steering in particular for electric vehicles comprising an asynchronous motor (4) as a device for actuating the movement of the steering wheel (5), in which the asynchronous motor (4) is of the type with a slight saddle effect, namely having output torques higher than the rated torque in the whole range of working frequencies.

## Description

The present invention relates to an electronic power steering system for electric vehicles, in particular trucks used for lifting and transporting pallets with an operator on board. The application in question relates to the methods of realizing the steering control whatever the command device attached to the steering wheel, i.e. tachometric dynamo, potentiometer, encoder or other device.

With regard to realization of the control, applications which use direct-current motors (commutator or brushless type) are already known; a more recent known solution envisages the use of an alternating-current (asynchronous induction) motor combined, however, with a position or speed transducer (usually an encoder) mechanically connected directly to the output shaft.

The use of an asynchronous induction motor offers considerable advantages in the form of reliability, no maintenance, smaller dimensions and low costs.

These advantages are heavily offset by the presence of the feedback encoder. The object of the following invention is to eliminate the abovementioned disadvantages and in particular to provide an electronic power steering system which, in addition to envisaging the use of an asynchronous induction motor, is also able to ensure the conditions such that elimination of the encoder on the shaft becomes a choice compatible with the high performance of the induction machine, i.e. with the necessity of obtaining (even in the absence of the encoder) high output torque values in all load and speed conditions.

We shall merely consider this latter characteristic as being the sole requirement for a good performance of an electric steering system in that it is sufficient per se to ensure excellent operation.

The information on position (which the encoder would have supplied as a secondary function) may, however, be obtained, if required, by means of a lower-cost and geared-down transducer mounted directly on the steering wheel.

Said objects are fully achieved by the electronic power steering system for electric vehicles according to the present invention, which is characterized by the contents of the claims indicated below, in particular by adopting, for the motor and control device, the constructional criteria described in the claims indicated below.

This characteristic feature, together with others, will be better illustrated by the following description of a preferred embodiment embodiment illustrated, purely by way of a nonlimiting example, in the accompanying plate of drawings, in which:
- Figure 1 shows the diagram, along orthogonal cartesian axes, of the torque of the motor as a function of the number of revs;
- Figure 2 shows the functional diagram of the power steering system.

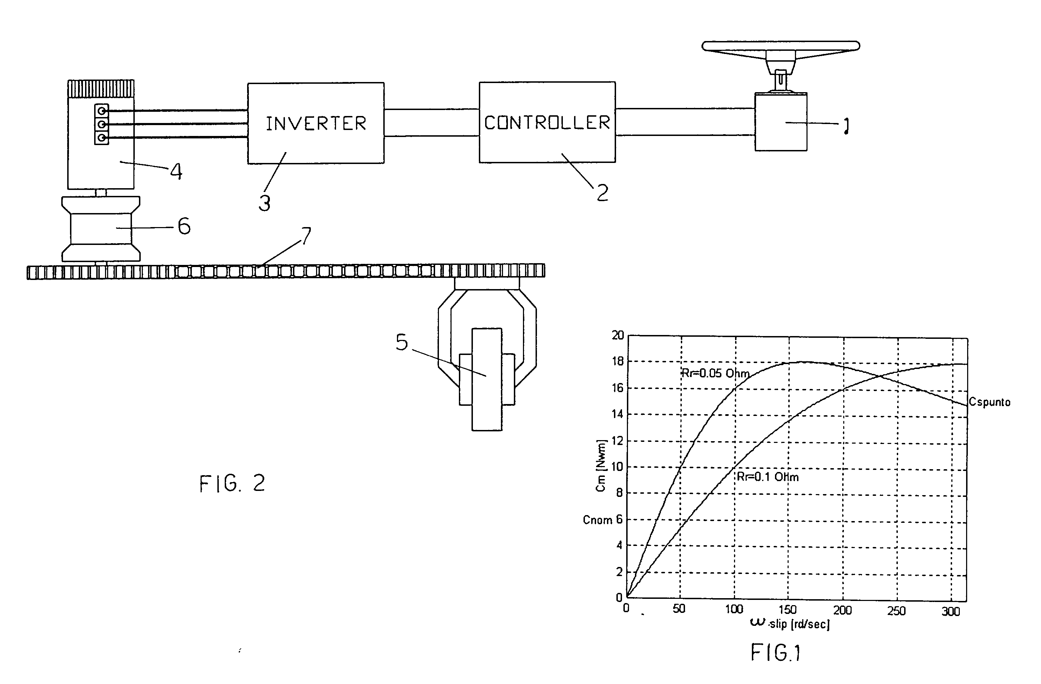

Figure 1 shows two torque characteristics (as a function of the slip frequency) respectively corresponding to two rotor resistance values. In particular it can be seen that, with an increase in the resistance, the maximum value of the torque tends to coincide with the starting torque.

This objective of a high torque profile in all conditions of use is attainable provided that, within the range of the working frequencies of the machine, the torque characteristics are devoid of the region of instability typical of this type of motor or at the most are characterized by a slight saddle effect which still permits starting torques higher than the rated torque (Figure 1). "Slight saddle effect" is understood as meaning, in fact, that, with an increase in the slip frequency beyond the maximum torque and up to the starting torque, the output torque values which can be produced are still higher than the rated torque (Figure 1).

In particular the specialized literature confirms that, in a constant-flow control system (as is normally used for induction motors), the region of instability in the torque characteristics disappears if the maximum pulsatance applied to the stator phases is less than the ratio between the rotor resistance and the total dispersed inductance (rotor plus stator). It follows that such a result will be reproducible in an equivalent manner either by means of an increase in the rotor resistance or by means of a reduction in the dispersed inductance of the motor (modification of the motor) or by reducing the frequency of the voltages applied to the stator phases (modification of the controller).

By adopting one or more of the aforementioned constructional criteria for the dimensional design of the motor and/or the controller 2, the requirement for the torque profile will be satisfied without excessively affecting the maximum current required; realization of the control may then be completed by applying (constant flow) phase voltages with increasing frequency using the steering command device.

The drawback of a reduction in the efficiency of the control which is a consequence of the existing proposal is partially offset by the characteristic feature of a highly discontinuous service and by the negligible percentage weight of the working power of the steering compared to the electrical equipment of the truck and is abundantly counterbalanced by the undoubted advantages of low cost, smaller overall dimensions, reduced installation work and increased reliability resulting from elimination of the encoder.

Figure 2 shows a final block diagram for a steering system which applies the ideas illustrated above.

In particular 1 denotes a command device connected to a controller 2 (for example a calculation microprocessor implementing the adjustment algorithm) which sends its signal to an inverter 3 connected to an asynchronous motor 4.

The assembly consisting of controller 2 and asynchronous motor 4 is understood as being realized and combined in compliance with the characteristics specified above. The shaft of the motor 4 is connected by means of transmission members of the known type, such as for example a reducer unit 6 and a drive chain 7, to the steering wheel 5. It is emphasized again that this particular method of control produces, as a consequence of no lesser importance, the possibility of efficiently actuating the asynchronous steering motor in the absence of any position or speed transducer.

## Claims

1. Electronic power steering in particular for electric vehicles such as trucks with an operator on board comprising an asynchronous motor (4) as a device for actuating the movement of a steering wheel (5), characterized in that the asynchronous motor (4) is of the type with a slight saddle effect, namely having output torques higher than the rated torque in the whole range of working frequencies.

2. Electronic power steering according to Claim 1, characterized in that it comprises a controller (2) connected to an inverter (3) which supplies the asynchronous motor (4) with torque characteristics having a slight saddle effect.
